# EUROPÄISCHE PATENTSCHRIFT

(11) **EP 0 985 844 B1**
(45) Veröffentlichungstag und Bekanntmachung des Hinweises auf die Patenterteilung: **04.01.2006**
(21) Anmeldenummer: 99113014.7
(22) Anmeldetag: 06.07.1999
(51) Int. Cl.: F16D 65/847

(54) **Elektronisch gesteuerte Belüftung für eine Scheibenbremse**
Electronically controlled disc brake ventilation
Ventilation à commande électronique pour freins à disque

(30) Priorität: 21.08.1998 DE 19838116
(43) Veröffentlichungstag der Anmeldung: 15.03.2000
(73) Patentinhaber: Bayerische Motoren Werke Aktiengesellschaft, 80788 München (DE)
(72) Erfinder: Kuffner, Walter, 80937 München (DE); Schönherr, Armin, 82496 Oberau (DE)
(74) Vertreter: Wesel-Mair, Julia

(56) Entgegenhaltungen:
- DE-A- 3 834 119
- DE-A- 4 138 464
- DE-A- 4 229 945
- DE-A- 4 243 988
- DE-A- 4 420 068
- GB-A- 2 269 144

## Beschreibung

Die Erfindung betrifft eine elektronisch gesteuerte Belüftung für eine Scheibenbremse gemäß dem Oberbegriff des Anspruchs 1 und geht aus von der gattungsbildenden GB 2 269 144 A.

Grundsätzlich ist bei der Verwendung von Scheibenbremsen eine Bremsbelüftung bekannt. Bei Scheibenbremsen können wegen der großen Anpreßkräfte örtlich hohe Temperaturen entstehen, die sich nachteilig auf das Bremsvermögen auswirken. Zur Vermeidung dieses Effekts ist bei besonders hoch beanspruchten Scheibenbremsen eine Belüftung vorgesehen. Meist sind in den Bremsscheiben radial angeordnete Luftkanäle angeordnet, die derart gestaltet sind, daß bei der Drehung eine Ventilatorwirkung entsteht. Durch diese Maßnahme erreicht man niedrigere Temperaturen beim Bremsen und nach dem Bremsvorgang eine schnellere Abkühlung. Die Bohrung kann ferner auch zum schnellen Verdrängen von Feuchtigkeit beim Bremsen und zur Gewichtserleichterung dienen.

Es hat sich jedoch herausgestellt, daß eine optimale Bremswirkung nicht immer mit einer maximalen Belüftung einhergeht. Dies gilt auch dann, wenn vorgegeben werden kann, ob eine besonders intensive Bremsscheiben-Belüftung über einen Strömungskanal erfolgt, indem dieser zur Scheibenbremse führende Strömungskanal freigelegt wird, der unter anderen Betriebsbedingungen verschließbar ist. Eine solche sog. "Ein-Aus-Schaltung" einer Scheibenbremsen-Belüftung ist in der eingangs genannten GB 2 269 144 A gezeigt.

Aufgabe der Erfindung ist es daher, eine Belüftung für eine Scheibenbremse nach dem Oberbegriff des Anspruchs 1 anzugeben, die in jedem Fahrzustand und bei jeder Bremsenbelastung eine optimale Bremsung ermöglicht. Diese Aufgabe wird durch die im kennzeichnenden Teil von Anspruch 1 genannten Merkmale gelöst.

Demgemäß ist bei einer belüfteten Scheibenbremse im Verlauf eines zur Scheibenbremse hinführenden Strömungskanals eine Einrichtung zur Veränderung des Strömungsquerschnitts vorgesehen, welche von einer Steuereinheit beaufschlagt wird. Die Steuereinheit generiert in Abhängigkeit von Eingangsgrößen ein der gewünschten Veränderung des Strömungsquerschnittes entsprechendes Belüftungssignal.

Durch die Veränderung des Strömungsquerschnitts in dem zur Bremsscheibe verlaufenden Strömungskanal kann eine auf den jeweiligen Fahrzustand und auf die jeweilige Bremsenbelastung angepaßte Kühlung sichergestellt werden.

Eine einfache Ausführungsvariante ist dadurch gekennzeichnet, daß als Einrichtung zur Veränderung des Strömungsquerschnitts im Strömungskanal eine von einem Motor, insbesondere einem Torque-Motor oder einem Getriebemotor, angetriebene Belüftungsklappe vorgesehen ist. Die Belüftungsklappe gibt im offenen Zustand den Strömungskanal frei, verschließt ihn im geschlossenen Zustand und ermöglicht durch Drehung jede Zwischenstellung zwischen den vorgenannten Extremstellungen.

Die Belüftungsklappe kann in besonders einfacher Weise von einem Elektromotor angetrieben werden, der von der Steuereinheit beaufschlagt wird. Insbesondere sollte sichergestellt werden, daß der Strömungskanal bei einem Systemausfall offen ist. Dies führt dazu, daß die Einrichtung im stromlosen Zustand geöffnet ist und kann in einer besonderen Ausführungsvariante durch ein Fehlerelement erreicht werden, welches die Belüftungsklappe in einem offenen Zustand beaufschlagt.

Als Eingangsparameter können die Bremsbelag-Dicke, die Bremsbelag-Temperatur und/oder der Verschleißzustand der Bremsscheibe berücksichtigt werden. Alternativ können natürlich auch andere Eingangsparameter oder -größen berücksichtigt werden. Diese Parameter können entweder direkt gemessen oder aber aus den im Fahrzeug vorliegenden Größen berechnet werden. Zusätzlich können die vorgenannten Größen auf den CAN-Bus gelegt werden.

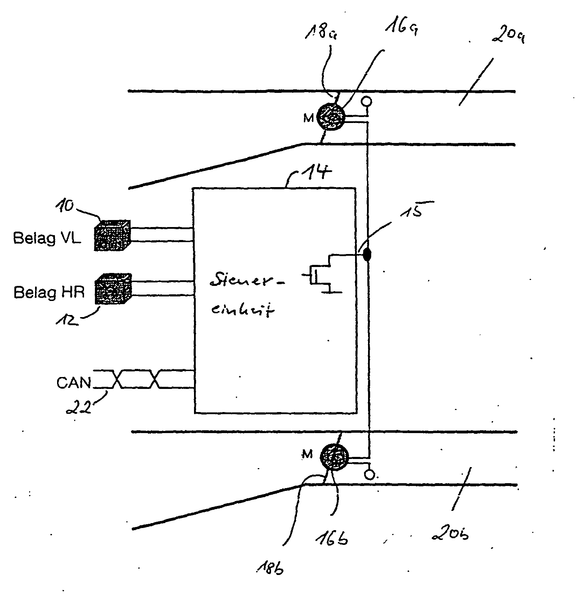

Die vorliegende Erfindung wird anhand eines Ausführungsbeispiels mit Bezug auf die beiliegende Zeichnung näher erläutert. Die Zeichnung stellt eine schematische Skizze einer erfindungsgemäßen elektronisch gesteuerten Belüftung dar.

Dabei ist eine Steuereinheit 14 vorgesehen, welche im vorliegenden Fall von Analogsensoren 10, 12 bestimmte Eingangswerte (Belag VL, Belag HR) erhält. Im vorliegenden Fall ist dies eine Information über den Belag vorne links und hinten rechts. Aufgrund dieser Informationen und anderer auf dem CAN-Bus 22 anliegender Informationen berechnet die Steuereinheit 14 die Belag-Dicke, die Belag-Temperatur und den Verschleißzustand der Bremsscheibe. Aus diesen Eingangsgrößen wird von der Steuereinheit 14 ein Belüftungssignal generiert, welches über einen Ausgang 15 an eine zu zwei Elektromotoren 16a und 16b führende Leitung angelegt wird und diese beaufschlagt. Die beiden Motoren 16a und 16b sind in entsprechenden Lüftungskanälen 20a und 20b angeordnet, die in Strömungsverbindung mit zu belüftenden Bremsscheiben (nicht dargestellt) stehen. Die Motoren 16a und 16b sind als Drehaktuator, im vorliegenden Fall als Torque-Motor (alternativ als Getriebemotor) ausgeführt, wobei - schematisch angedeutet - eine spiralförmige Rückholfeder auf jeder Motorachse angeordnet ist. Auf der Motorachse ist ferner eine Belüftungsklappe 18a, 18b angeordnet, die durch den Betrieb des Motors geöffnet, geschlossen oder in einem Zwischenzustand gehalten werden kann. Im stromlosen Zustand (fail safe mode) wird die Klappe 18a, 18b über die Rückholfeder geöffnet.

Falls es für andere Anwendungen erforderlich ist, kann der "fail safe mode" auch umgekehrt realisiert werden. Die Information über die momentane Belüftung der Bremsscheiben kann auch auf den CAN-Bus gelegt werden.

Durch eine Aktivstromüberwachung der Ansteuerschaltung können elektrische Unterbrechungen, beispielsweise im Stecker, im Kabel, in der Spule etc. erkannt werden.

Insgesamt läßt sich mit der vorliegenden Erfindung eine kostengünstige Belüftungssteuerung zur parameterabhängigen Belüftung von Bremsscheiben realisieren. Dabei wird den Bremsscheiben eine für die optimale Funktionsweise der Bremsen erforderliche Kühlung zugeführt.

## Patentansprüche

1. Elektronisch gesteuerte Belüftung für eine Scheibenbremse, insbesondere bei einem Fahrzeug, bei der eine zu belüftende Bremsscheibe im Verlauf eines Strömungskanals (20a, 20b) angeordnet ist, sowie mit einer Steuereinheit (14), die in Abhängigkeit von Eingangsgrößen (10, 12) ein Belüftungssignal erzeugt und dieses an eine Einrichtung (16a, 16b, 18a, 18b) zur Veränderung des Strömungsquerschnitts des Strömungskanals (20a, 20b) abgibt,
**dadurch gekennzeichnet, dass** der Strömungsquerschnitt des Strömungskanals nicht nur vollständig freigegeben oder verschlossen werden kann, sondern dass zwischen diesen beiden Extremen auch Zwischenstellungen des Strömungsquerschnitts einstellbar sind.

2. Elektronisch gesteuerte Belüftung für eine Scheibenbremse nach Anspruch 1,
**dadurch gekennzeichnet,**
**daß** als Einrichtung zur Veränderung des Strömungsquerschnitts im Strömungskanal eine von einem Motor (16a, 16b), insbesondere einem Torque-Motor oder Getriebe-Motor, angetriebene Belüftungsklappe (18a, 18b) vorgesehen ist.

3. Elektronisch gesteuerte Belüftung für eine Scheibenbremse nach Anspruch 1 oder 2,
**dadurch gekennzeichnet,**
**daß** die Einrichtung in einem stromlosen Zustand offen, insbesondere von einem Federelement offen gehalten ist.

4. Elektronisch gesteuerte Belüftung für eine Scheibenbremse nach einem der vorhergehenden Ansprüche,
**dadurch gekennzeichnet,**
**daß** als Eingangsgrößen die Bremsbelag-Dicke, die Bremsbelag-Temperatur und/oder der Verschleißzustand der Bremsscheibe berücksichtigt werden.

5. Elektronisch gesteuerte Belüftung für eine Scheibenbremse nach einem der vorhergehenden Ansprüche,
**dadurch gekennzeichnet,**
**daß** die Eingangsparameter direkt gemessen oder aus anderen im Fahrzeug vorliegenden Größen berechnet werden.

## Claims

1. An electronically controlled ventilation system for a disc brake, especially in a vehicle, wherein a brake disc for ventilation is disposed in a flow duct (20a, 20b), the system also comprising a control unit (14) which, in dependence upon input variables (10, 12), generates a ventilation signal and delivers it to a device (16a, 16b, 18a, 18b) for altering the flow cross-section of the flow duct (20a, 20b),
**characterised in that** the flow-duct cross-section can be completely opened or completely closed or adjusted to intermediate positions between these two extremes.

2. An electronically controlled ventilation system for a disc brake according to claim 1, **characterised in that** the device for altering the flow-duct cross-section is a ventilation valve (18a, 18b) driven by a motor (16a, 16b), especially a torque motor or geared motor.

3. An electronically controlled ventilation system for a disc brake according to claim 1 or 2, **characterised in that** the device when currentless is held open, especially by a spring element.

4. An electronically controlled ventilation system for a disc brake according to any of the preceding claims, **characterised in that** the input variables taken into consideration are the thickness, lining temperature and/or the state of wear of the brake disc.

5. An electronically controlled ventilation system for a disc brake according to any of the preceding claims, **characterised in that** the input parameters are measured directly or calculated from other quantities available in the vehicle.

## Revendications

1. Ventilation à commande électronique pour un frein à disque, notamment pour un véhicule, dans laquelle un disque de frein à ventiler est disposé sur le parcours d'un canal d'écoulement (20a, 20b), elle est également dotée d'une unité de commande (14) qui génère un signal de ventilation en fonction de grandeurs d'entrée (10, 12) émis vers un dispositif (16a, 16b, 18a, 18b) pour modifier la section transversale du canal d'écoulement (20a, 20b),
**caractérisée en ce que**
la section transversale du canal d'écoulement peut être non seulement dégagée ou complètement bloquée, mais également réglée dans des positions intermédiaires d'écoulement entre ces deux extrémités.

2. Ventilation à commande électronique pour un frein à disque selon la revendication 1,
**caractérisée en ce qu'**
un clapet d'aération (18a, 18b) entraîné par un moteur (16a, 16b), notamment par un servomoteur ou par un moteur d'entraînement, sert de dispositif pour modifier la section transversale du canal d'écoulement.

3. Ventilation à commande électronique pour un frein à disque selon la revendication 1 ou 2,
**caractérisée en ce que**
le dispositif est ouvert dans un état hors tension et est notamment maintenu ouvert par un élément à ressort.

4. Ventilation à commande électronique pour un frein à disque selon l'une quelconque des revendications précédentes,
**caractérisée en ce que**
l'épaisseur de la garniture de frein, la température de la garniture de frein et/ou l'état d'usure du disque de frein sont pris en compte en tant que grandeurs d'entrée.

5. Ventilation à commande électronique pour un frein à disque selon l'une quelconque des revendications précédentes,
**caractérisée en ce que**
les paramètres d'entrée sont mesurés directement ou sont calculés à partir d'autres grandeurs existant dans le véhicule.
